# EUROPEAN PATENT APPLICATION

(11) **EP 4 696 563 A1**
(43) Date of publication of application: **18.02.2026**
(21) Application number: 24788519.7
(22) Date of filing: 18.03.2024
(51) Int. Cl.: B60R 22/195, B60R 22/26

(54) **CONNECTION MEMBER FOR CONNECTING WIRE AND WEBBING**

(30) Priority: 10.04.2023 JP 2023063217
(71) Applicant: Autoliv Development AB, 44783 Vargarda (SE)
(72) Inventor: ONO, Katsuyasu, Yokohama-shi, Kanagawa 222-8580 (JP); NAGATOMO, Junichi, Yokohama-shi, Kanagawa 222-8580 (JP)
(74) Representative: Müller Verweyen
(86) International application number: PCT/JP2024/010430
(87) International publication number: WO 2024/214489

(57) **Abstract**

Provided is a connecting member for connecting a wire connected to a drive unit of a pretensioner and a webbing for restraining an occupant in a seat, including:
a securing part that secures the webbing such that the webbing extends in a first direction from the connecting member; and
a shaft part around which the wire is wound so as to extend from the connection member in a direction opposite to the first direction; where the securing part and the shaft part are provided such that a first plane including a wide surface of the webbing extending in the first direction and a second plane including a loop surface of a loop formed by the wire around the shaft of the shaft part intersect with each other. With this manner of connecting member, fatigue fracture of the wire will not occur even if the connecting member is pushed down when an occupant gets in or out of the vehicle.

## Description

### TECHNICAL FIELD

The present invention relates to a connecting member for connecting a wire and a webbing.

### BACKGROUND ART

In a seat belt device for a vehicle, a pretensioner is known which, when actuated in an emergency such as a vehicle collision, retracts the webbing via a wire to press the occupant against the seat and restrain the occupant more strongly (see, for example, Patent Document 1).

### RELATED ART DOCUMENTS

### PATENT DOCUMENTS

Patent Document 1: Japanese Unexamined Patent Application Publication 2022-71614

### SUMMARY OF THE INVENTION

### PROBLEM TO BE SOLVED BY THE INVENTION

Pretensioners often include a quick-attach fitting as a connecting member for connecting the wire and the webbing in models that retract a lap anchor, or a buckle in models that retract a locking tongue. Models that retract the lap anchor via a quick-attach fitting are commonly known as pyrotechnic lap pretensioners (PLP), and models that retract the locking tongue via a buckle are commonly known as pyrotechnic buckle pretensioners (PBP).

Now, as recent vehicles are equipped with large batteries and various electrical equipment under the floor, the gap between the floor and the seats has become narrower than before. Accordingly, the mounting position of the pretensioner drive unit has also been shifted closer to the seat surface. When the mounting position of the drive unit approaches the seat surface, the connecting member that connects the wire and the webbing always exists at a position that protrudes slightly from the side of the seat surface. If the connecting member protrudes beyond the seat surface, the occupant may push the connecting member down onto the seat surface with their buttocks when getting in or out of the vehicle. When the connecting member is pushed down onto the seating surface, the wire, which is a flexible member, is bent and receives an excessive tensile load. If such bending operations are repeated, there is a risk that fatigue fracture will occur in the wire.

In order to solve these types of problems, an object of the present invention is to provide a connecting member used in a pretensioner that connects a wire and a webbing, and where fatigue fracture does not occur in the wire even if the wire is pushed down when an occupant gets in or out of the vehicle.

### MEANS FOR SOLVING THE PROBLEM

A connecting member according to a first aspect of the present invention is a connecting member for connecting a wire connected to a drive unit of a pretensioner and a webbing for restraining an occupant in a seat, including:
a securing part that secures the webbing such that the webbing extends in a first direction from the connecting member; and
a shaft part around which the wire is wound so as to extend from the connection member in a direction opposite to the first direction; wherein
the securing part and the shaft part are provided such that a first plane including a wide surface of the webbing extending in the first direction and a second plane including a loop surface of a loop formed by the wire around the shaft of the shaft part intersect with each other.

### EFFECT OF THE INVENTION

The present invention can provide a connecting member used in a pretensioner for connecting a wire and a webbing, where fatigue fracture does not occur in the wire even when the member is pushed down when an occupant gets in or out of a vehicle.

### BRIEF DESCRIPTION OF THE DRAWINGS

FIG. 1 is a perspective view of a quick-attach fitting according to the present Embodiment and associated peripheral elements thereof;
FIG. 2 is an exploded perspective view depicting the configuration of the quick-attach fitting;
FIG. 3 is a view seen from a specific direction indicated by an arrow in FIG. 1;
FIG. 4 is an enlarged view depicting the configuration of a channel;
FIG. 5 is a perspective view of a guide ring;
FIG. 6 is a diagram depicting the change in wire as the quick-attach fitting is tilted;
FIG. 7 is a perspective view of a crimping ring according to a first Modified Example;
FIG. 8 is a diagram depicting the state of the quick-attach fitting according to the first Modified Example after being tilted;
FIG. 9 is a diagram depicting the change in the wire caused by tilting the quick-attach fitting according to a second Modified Example;
FIG. 10 is a diagram depicting the change in the wire caused by tilting the quick-attach fitting according to the third Modified Example;
FIG. 11 is a perspective view depicting the buckle according to the present embodiment and related peripheral elements; and
FIG. 12 is a perspective view of a crimping ring.

### EMBODIMENTS OF THE INVENTION

An embodiment of the present invention will be described with reference to the attached drawings. In each diagram, the same reference numerals designate identical or similar configurations. Note that the invention according to the claims is not limited to the following embodiments. In addition, not all of the configurations described in the embodiments are necessarily essential means for solving the problems.

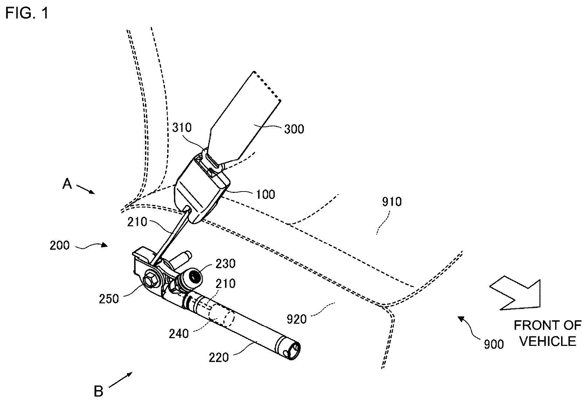

FIG. 1 is a perspective view of a quick-attach fitting 100 according to the present Embodiment and associated peripheral elements thereof. The quick-attach fitting 100 is a form of a connecting member for connecting a wire 210 connected to a drive unit of a pretensioner 200 and a webbing 300 for restraining an occupant to a seat 900. The webbing 300 is often referred to as a seat belt.

The pretensioner 200 is a device that is activated in an emergency such as during a vehicle collision, and pulls in the webbing 300 via the wire 210 to press the occupant against the seat and provide more firm restraint. The quick-attach fitting 100 according to the present Embodiment is used in a pyrotechnic lap pretensioner (PLP), which is a model of pretensioner 200 that mainly pulls in a lap anchor. Note that in the present Embodiment, the vehicles assumed are various private vehicles and transport vehicles, such as BEVs (Electric Vehicles) and HEVs (Hybrid Electric Vehicles) in which the battery is located under the seats where the occupants sit, and gasoline-powered vehicles with low seating positions such as sports cars.

The pretensioner 200 is disposed on a side surface 920 of a seat 900 disposed in a vehicle. Note that in FIG. 1, the direction indicated by the outline arrow is the front of the vehicle, and an occupant enters the vehicle through a door (not depicted) provided on the side of the vehicle and sits on the seat surface 910.

The pretensioner 200 mainly includes the wire 210, a cylinder 220, a gas generator 230, a piston 240, and a securing bolt 250. The wire 210 is, for example, a wire rope made of twisted metal wires, and is a tension transmission member also called a cable. At least a first end of the wire 210 is connected to the piston 240. The cylinder 220 is a cylindrical member in which the piston 240 is movably stowed. The gas generator 230 is a power source constituted of, for example, a micro gas generator (MGG).

The cylinder 220, the gas generator 230, and the piston 240 function as a drive unit of the pretensioner 200. Specifically, the gas generator 230 is electrically connected to an ECU installed in the vehicle, and generates gas when an operation signal is received from the ECU. The generated gas flows into the cylindrical space within the cylinder 220, instantly increasing the internal pressure therein and causing the piston 240 to move rapidly. As the piston 240 moves, a part of the wire 210 connected to the piston 240 is pulled into the cylindrical space, and as a result, the webbing 300 connected via the quick-attach fitting 100 is also pulled below the seat 900, increasing the restraining force that restrains the occupant to the seat 900.

The drive unit of the pretensioner 200, which includes the cylinder 220, the gas generator 230, and the piston 240, is secured to the frame of the vehicle or the seat 900 via the securing bolt 250. Note that as depicted in the drawing, the wire 210 is routed around the shaft of the securing bolt 250 and connected to the piston 240.

The end part of the webbing 300 is connected to a lap anchor 310 formed, for example, from a metal plate, and the lap anchor 310 is secured to the quick-attach fitting 100. Once the lap anchor 310 is secured to the quick-attach fitting 100 by the assembly worker, the occupant, a user of the vehicle, cannot easily attach or detach the lap anchor 310 to or from the quick-attach fitting 100 without the use of tools or the like.

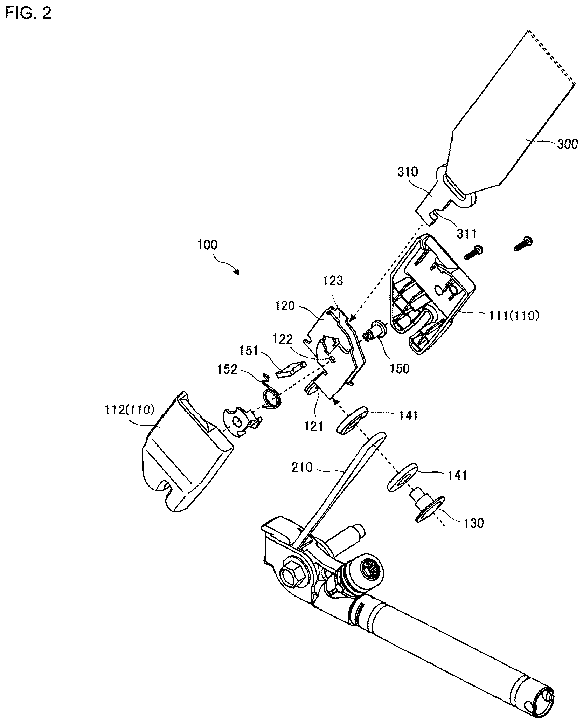

FIG. 2 is an exploded perspective view depicting the configuration of the quick-attach fitting 100. The quick-attach fitting 100 is mainly composed of a cover 110, a channel 120, a wire rivet 130, a guide ring 141, a latch pin 150, a latch piece 151, and a biasing spring 152. The cover 110 forms the housing of the quick-attach fitting 100 and includes a first cover 111 and a second cover 112 that are combined opposite each other. The channel 120 is a base material that connects the wire 210 and the webbing 300 to each other, and is formed by bending, for example, a metal plate. The channel 120 may be constructed by combining a plurality of folded metal plates so as to form slits 123 into which the lap anchor 310 is inserted.

The tip side of the wire rivet 130 is inserted into an insertion hole 121 provided in the channel 120 and crimped, and functions as a shaft part for winding the wire 210 around. As depicted, the wire 210 is wound around the shaft of the wire rivet 130, formed in a loop. The two guide rings 141 are inserted through the shaft part of the wire rivet 130 so as to face each other and sandwich the wire 210 from both sides. The guide ring 141 is a retaining member that retains the wire 210 and rotates together with the wire rivet 130. The specific configuration will be described below.

The latch pin 150, the latch piece 151, and the biasing spring 152 are attached to the channel 120 and function as securing parts for securing the lap anchor 310. Specifically, the tip end part of the lap anchor 310 is inserted into the slit 123 of the channel 120, and a latching groove 311 provided at the tip end part engages with the latch piece 151 biased by the biasing spring 152, thereby securing the lap anchor 310 to the channel 120. Note that as depicted in the figure, the direction in which the wire 210 wound around the quick-attach fitting 100 extends from the quick-attach fitting 100 is opposite to the direction in which the webbing 300 secured to the quick-attach fitting 100 extends from the quick-attach fitting 100.

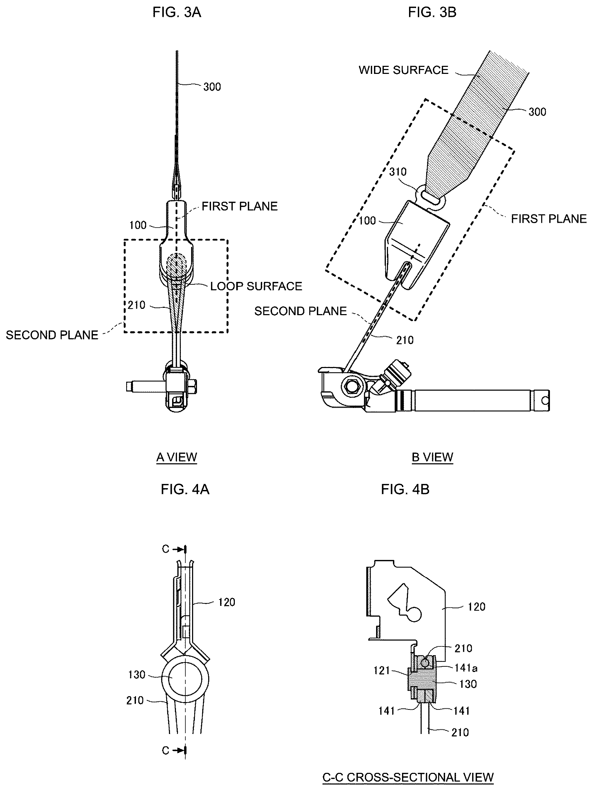

FIG. 3 is a view taken along an arrow in a specific direction depicted in FIG. 1. In particular, FIG. 3(A) is a drawing as viewed from the direction A depicted in FIG. 1, and FIG. 3(B) is a drawing as viewed from the direction B depicted in FIG. 1. As depicted in FIG. 3(A), the wire 210 wound around the quick-attach fitting 100 forms a loop surface (shaded portion). The plane including this loop surface is defined as the second plane. When referring to FIG. 1, it will be understood that the second plane is a plane parallel to the width direction of the vehicle and substantially perpendicular to the side surface 920 of the seat 900. Note that the loop surface may be a surface that is in contact with the wire surface that forms the loop, or may be a surface formed by the central axis of the wire.

As depicted in FIG. 3(B), a plane including the wide surface (hatched portion) of the webbing 300 secured to the quick-attach fitting 100 is defined as a first plane. When referring to FIG. 1, it is understood that the first plane is a plane that is substantially parallel to the side surface 920 of the seat 900 and perpendicular to the width direction of the vehicle. Note that the wide surface may be the front or back surface of the webbing 300.

The quick-attach fitting 100 in the present Embodiment is provided with a shaft part for winding the wire 210 and a securing part for securing the lap anchor 310 such that the first plane and the second plane defined in this manner are perpendicular to each other. Note that in the present Embodiment, the shaft part and the securing part are achieved using the wire rivet 130 and the latch piece 151, and the like, which are respectively arranged in the channel 120 as described above, but various configurations of the shaft part and the securing part can be adopted as long as the first plane and the second plane are perpendicular to each other. For example, the securing part may be configured to directly clamp the end part of the webbing 300 that does not include the lap anchor 310. That is, the connecting member for connecting the wire 210 and the webbing 300 is not limited to the quick-attach fitting aspect. For example, an aspect where the slit-shaped insertion hole for inserting the webbing is provided at the end part of the connecting member, and the webbing is secured to the connecting member by being inserted through the insertion hole, folded back, and sewn together is also feasible. In this case, the insertion hole through which the webbing is inserted functions as the securing part.

FIG. 4 is an enlarged view depicting the configuration of the channel 120. In particular, FIG. 4(A) is a view of the wire 210 wound around the wire rivet 130 observed from the head side of the wire rivet 130 that is crimped into the channel 120, and FIG. 4(B) is a cross-sectional view of C-C depicted in FIG. 4(A).

As depicted in FIG. 4A, the wire 210 forms a loop with the wire rivet 130 as a winding shaft. Furthermore, as depicted in FIG. 4(B), even when the wire 210 integrally rotates with the wire rivet 130, two guide rings 141 are interposed to guide the wire 210 such that the loop does not spread apart from the wire rivet 130.

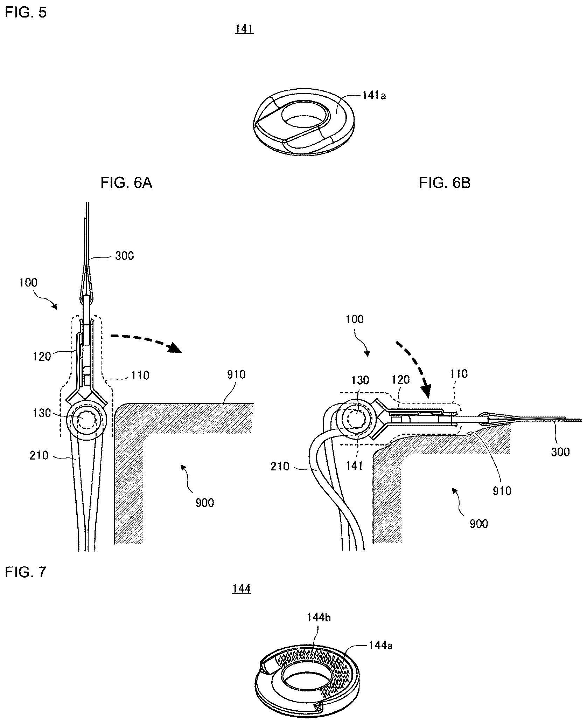

Specifically, two guide rings 141, each having a groove for guiding the wire 210, are placed facing each other on the shaft part of the wire rivet 130, and the wire rivet 130 is crimped onto the channel 120 such that the wire 210 is sandwiched therebetween. FIG. 5 is a perspective view of the guide ring 141. As depicted in the drawing, the guide ring 141 has a guide groove 141a for guiding the wire 210. The groove width of the guide groove 141a is set to be slightly wider than the diameter of the wire 210, such that the wire 210 can slide somewhat in the guide groove 141a. In addition, the guide groove 141a is formed in a U-shape such that the loop formed by the wire 210 does not spread around the shaft of the wire rivet 130. When the wire rivet 130 is crimped, the two guide rings 141 are inserted through the shaft part of the wire rivet 130 in a state where they face each other and their respective guide grooves 141a sandwich the loop of the wire 210. When the wire rivet 130 is crimped onto the channel 120, the two guide rings 141 are secured to the shaft part of the wire rivet 130. In this case, the two guide rings 141 do not rotate relative to the wire rivet 130, but rotate integrally therewith as the wire rivet 130 rotates. With this configuration, the shaft part of the wire rivet 130 indirectly supports the wire 210 via the guide ring 141.

Note that recent vehicles are equipped with large batteries and various electrical equipment under the floor, so the gap between the floor and the seats has become narrower than before. Accordingly, the mounting position of the pretensioner drive unit has also been shifted closer to the seat surface. In addition, sports cars and other vehicles have a low seating position to begin with, and the pretensioner drive unit is attached close to the seating surface. If the mounting position of the drive unit is close to the seat surface, the quick-attach fitting or buckle that connects the wire and webbing will always be located at a position on the side part of the seat surface that protrudes slightly from the seat surface. If the quick-attach fitting or buckle protrudes above the seat surface, occupants may push them down onto the seat surface with their buttocks when getting in or out of the car. When the quick-attach fitting or buckle is pushed down onto the seat surface, the wire, which is a flexible member, is locally bent at the boundary and is subjected to an excessive tensile load. If such bending operations are repeated, there is a risk that fatigue fracture will occur in the wire.

In the present Embodiment, the quick-attach fitting 100 also protrudes from the seat surface 910 as depicted in FIG. 1. Therefore, it is assumed that the quick-attach fitting 100 may be pushed down by the buttocks of an occupant, but the quick-attach fitting in the present Embodiment prevents the wire 210 from being locally bent. This will be specifically described with reference to FIG. 6.

FIG. 6 is a diagram depicting the change in wire 210 as the quick-attach fitting 100 is tilted. Note that in FIG. 6, the cover 110 and the shaft part of the wire rivet 130 are depicted by dashed lines so that the state of the wire 210 can be seen.

FIG. 6A indicates the same condition as depicted in FIG. 1, with the quick-attach fitting 100 not tilted. In this state, the webbing 300 is lifted up toward the shoulder anchor or draped across the occupant's waist, such that the webbing 300 and wire 210 extend in an approximately straight line only in the area surrounding the quick-attach fitting 100. In this state, the wire 210 forms a gentle loop without being bent beyond the curvature along the shaft part of the wire rivet 130.

However, as described above and depicted in the drawing, before the occupant gets in, the quick-attach fitting 100 is also lifted up toward the shoulder anchor, and at least a part thereof protrudes from the seat surface 910 of the seat 900. In this state, if an occupant attempts to sit on the seat 900 from outside the vehicle, the occupant may push the quick-attach fitting 100 down in the direction of the dotted arrow with, for example, their buttocks.

FIG. 6(B) indicates the state in which the quick-attach fitting 100 has been pushed down and pressed against the seat surface 910. In this state, the guide ring 141 also tilts together with the channel 120, such that the downward facing U-shaped guide groove 141a is rotated 90 degrees, and the wire 210 is pulled out horizontally from the shaft part of the wire rivet 130. On the other hand, since the wire 210 is connected to the drive unit of the pretensioner 200, the wire bends along a curve that smoothly connects the horizontal direction and the drive unit direction, as depicted in the drawing. Particularly, because the guide ring 141 permits the wire 210 to slide along the guide groove 141a, even when a large tensile force acts on the wire 210, the wire self-adjusts by sliding appropriately to relieve such tensile force, without locally bending, so as to trace a larger radius of curvature.

In other words, as depicted in FIGS. 3(A) and (B), the quick-attach fitting 100 maintains a relationship in which the first plane including the wide surface of the webbing 300 and the second plane including the loop surface of the wire 210 are approximately perpendicular to each other, so when the quick-attach fitting 100 is pushed down, the loop surface becomes approximately perpendicular to the seat surface 910, and the wire 210 is pulled out horizontally while sliding moderately, thereby avoiding local bending. At least, the wire rivet 130 is not bent beyond the curvature along the shaft part thereof. Therefore, even if the quick-attach fitting 100 is repeatedly tilted, the wire 210 will not break. Note that although FIG. 6 assumes the case where an occupant gets into the vehicle, even if the quick-attach fitting 100 is tilted in the opposite direction when the occupant gets out of the vehicle, the bending of the wire 210 is simply reversed, so local bending of the wire 210 can still be avoided.

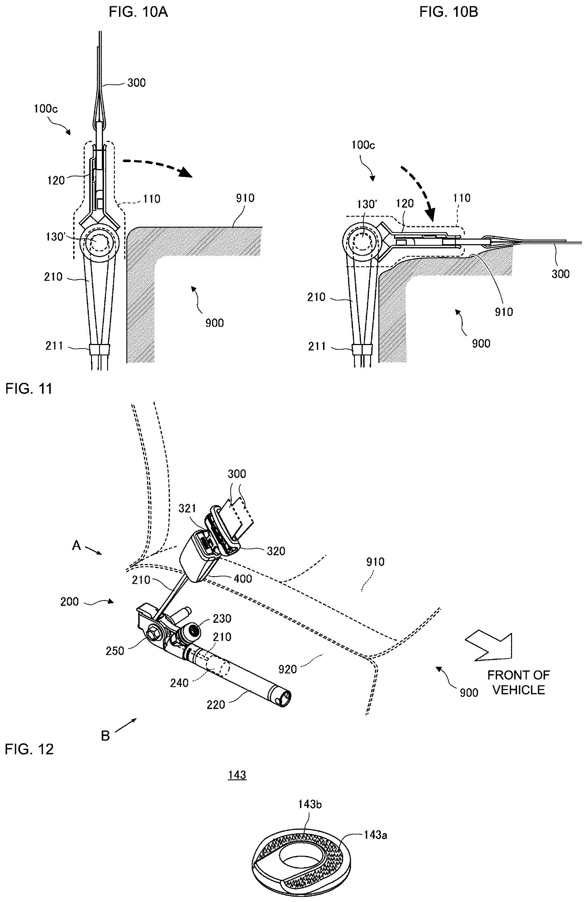

Note that in the present Embodiment described above, a guide ring 141 is used to permit the wire 210 to slide in the guide groove 141a, but a crimping ring, which will be described later using FIG. 12, may be used instead of the guide ring 141. The crimping ring is pressed onto and sandwiches the wire 210 such that the wire does not slide. This manner of crimping ring is also a retaining member that retains the wire 210 and rotates together with the wire rivet 130. By using this manner of crimping ring, the wire 210 extends horizontally from the shaft part of the wire rivet 130 without sliding within the crimping ring as the quick-attach fitting 100 is tilted, and smoothly curves toward the drive unit. Note that the configuration of the crimping ring is not limited to the case where a slide prevention protrusion that bites into the wire 210 is provided in the guide groove as described using FIG. 12, but may be any configuration that can sandwich the wire 210.

Here, a first Modified Example that is different from the above embodiment will be described. The first Modified Example differs from the above embodiment in the configuration of the ring that securely sandwiches the wire 210. FIG. 7 is a perspective view of a crimping ring 144 according to the first Modified Example. The crimping ring 144 has a guide groove 144a for sandwiching the wire 210, similar to the guide ring 141, but the shape thereof is not U-shaped; the outer peripheral wall is semicircular and the inner peripheral wall is annular. Furthermore, on the surface of the guide groove 144a, a slide prevention protrusion 144b is arranged in an area that is roughly surrounded by the outer peripheral wall. Therefore, when the two crimping rings 144 are placed opposite each other and the wire rivet 130 is crimped to the channel 120 such that the wire 210 is sandwiched therebetween, the wire 210 and the crimping rings 144 are integrally secured together. In other words, this manner of crimping ring 144 is also a retaining member that retains the wire 210 and rotates together with the wire rivet 130. In addition, in the area where no outer peripheral wall is provided, the wire 210 can be displaced around the axis of the wire rivet 130.

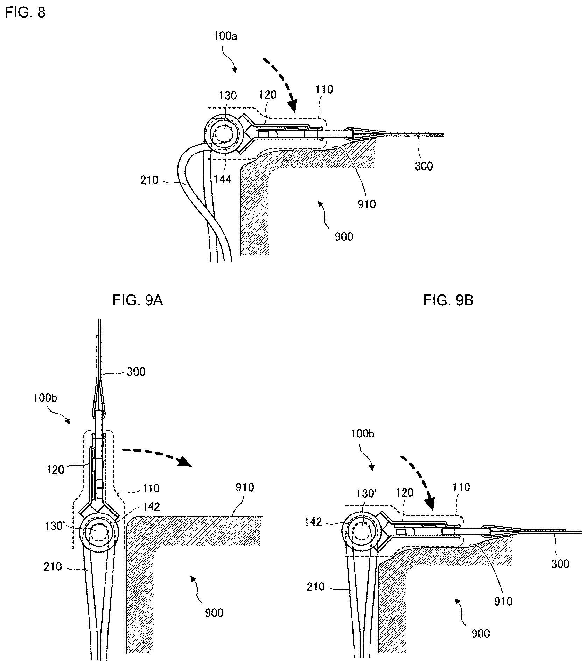

FIG. 8 is a diagram depicting the state of a quick-attach fitting 100a according to the first Modified Example after the fitting has been tilted, and corresponds to FIG. 6(B). When the quick-attach fitting 100a employing the crimping ring 144 according to the first Modified Example is tilted and pressed against the seat surface 910, the loop-shaped wire 210 is subjected to a greater tensile force on the upper side of the wire rivet 130. Then, the upper portion of the wire 210 curves so as to wrap around the shaft of the wire rivet 130 and moves in the direction of the drive unit. On the other hand, the lower portion of the wire 210 curves toward the drive unit in accordance with the excess wire length (the portion protruding from the shortest path) that occurs when the quick-attach fitting 100a is tilted. Even with this quick-attach fitting 100a,the wire 210 can be prevented from being locally bent.

Further modifications will be described. FIG. 9 is a diagram depicting a change in the wire 210 caused by tilting a quick-attach fitting 100b according to a second Modified Example of the embodiment. The quick-attach fitting 100b according to the second modified example differs from the above-described quick-attach fitting 100 in two respects: first, a wire rivet 130' that is a stepped rivet is used in place of the wire rivet 130; and second, a rotating ring 142 is used in place of the guide ring 141. The other configurations are the same as those of the quick-attach fitting 100, so the same elements are given the same reference numerals and their description is omitted.

FIG. 9(A) is a diagram corresponding to FIG. 6(A), depicting the quick-attach fitting 100b in a non-tilted state. As described above, the wire rivet 130' is a stepped rivet, and when tightened against the channel 120, creates a slight gap with the rotating ring 142, which sandwiches and retains the wire 210, such that the rotating ring 142 can rotate around its axis. The rotating ring 142 is a rotating member that rotates around the axis of the wire rivet 130' while retaining the loop of the wire 210, and is inserted through the shaft part of the wire rivet 130' while sandwiching and retaining the wire 210. The rotating ring 142 may be substantially the same member as the guide ring 141, and two of them are used as a pair, facing each other and sandwiching the wire 210 therebetween. However, the wire 210 is not required to slide along the guide groove, so the configuration may instead be such that two opposing rotating rings 142 sandwich and crimp the wire 210.

FIG. 9(B) is a view corresponding to FIG. 6(B), and depicts the state in which the quick-attach fitting 100b has been pushed down and pressed against the seat surface 910. In this Modified Example, the rotating ring 142 can rotate around the shaft of the wire rivet 130', so even if the wire rivet 130' crimped to the channel 120 rotates as the channel 120 tilts, the rotating ring 142 can roughly maintain the orientation thereof while remaining sandwiched on the wire 210. In other words, the loop of wire 210 can substantially maintain the orientation thereof and shape even when quick-attach fitting 100b is pushed down. Therefore, the wire 210 can be prevented from being locally bent.

Note that by interposing a rotating ring 142 between the wire rivet 130' and the loop of the wire 210 as in this Modified Example, friction between the shaft part of the wire rivet 130' and the wire 210 is reduced. This configuration prevents wear on the shaft part of the wire rivet 130'. In addition, the rotating ring 142 sandwiches and retains the wire 210, thereby preventing the wire 210 from separating away from the wire rivet 130' and maintaining the loop shape.

FIG. 10 is a diagram depicting a change in the wire 210 caused by tilting a quick-attach fitting 100b according to a third Modified Example of the embodiment. A quick-attach fitting 100c according to the third Modified Example differs from the quick-attach fitting 100b according to the second Modified Example in employing the wire rivet 130' according to the second Modified Example, but omits the rotating ring 142, and employs a wire band 211. The other configurations are the same as those of the quick-attach fitting 100b, so the same elements are given the same reference numerals and their description is omitted.

FIG. 10(A) is a view corresponding to FIG. 9(A), depicting the quick-attach fitting 100c in a non-tilted state. The wire rivet 130' is a stepped rivet as described above, and when crimped to the channel 120, forms a shaft part having an axial length longer than the diameter of wire 210 such that the loop of wire 210 can rotate about the shaft thereof. The wire 210 is bound at the base portion of the loop by a wire band 211, which maintains the shape of the loop.

FIG. 10(B) is a view corresponding to FIG. 9(B), and depicts the state in which the quick-attach fitting 1 O O c has been pushed down and pressed against the seat surface 910. In this Modified Example, the loop of wire 210 can rotate around the shaft of the wire rivet 130', so even if the wire rivet 130', which is crimped to the channel 120, rotates as channel 120 tilts, the loop of wire 210 can largely maintain the orientation and shape thereof. In other words, at least a part of the loop of wire 210 is in contact with the outer periphery of wire rivet 130' and rotates about the shaft relative to wire rivet 130, thereby substantially maintaining the orientation and shape of the loop. Therefore, even with such a simple configuration, the wire 210 can be prevented from being locally bent.

In the present Embodiment described above and three Modified Examples thereof, a quick-attach fitting used in a pyrotechnic lap pretensioner (PLP), which is a model of pretensioner 200 that mainly retracts the lap anchor, has been described. However, a substantially similar configuration can also be applied to a buckle used in a pyrotechnic buckle pretensioner (PBP), which is a model that retracts a locking tongue. FIG. 11 is a perspective view depicting a buckle 400 according to another embodiment of the present Embodiment and the related peripheral elements thereof. FIG. 11 is a diagram corresponding to FIG. 1, and the same components as those in the embodiment described above are given the same reference numerals unless otherwise specified, and the description thereof is omitted.

In the case of a pyrotechnic buckle pretensioner (PBP), the connecting member for connecting the wire 210 connected to the drive unit of the pretensioner 200 and the webbing 300 for restraining the occupant in the seat is the buckle 400. While the securing part of the quick-attach fitting 100 secures the webbing 300 in a non-removable manner, the securing part of the buckle 400 has a detachment mechanism that secures the webbing 300 in a removable manner.

Specifically, a locking tongue 320 through which the webbing 300 is slidably inserted is provided with a tongue plate 321 that is detachably fastened to the buckle 400, and the buckle 400 is provided with a latching mechanism that latches the tongue plate 321. The latching mechanism is a mechanism in which, for example, when the tongue plate 321 is inserted, a latching state is established by a biasing hook, and when a push button is pressed, the latching state is released.

The locking tongue 320 has a function of dividing the webbing 300 into a portion that is suspended diagonally across the occupant's chest and a portion that is suspended horizontally across the occupant's waist, but when the locking tongue 320 is attached to the buckle 400, the direction in which the webbing 300 extends from the buckle 400 and the direction in which the wire 210 wound around the buckle 400 extends from the buckle 400 are generally opposite directions.

The buckle 400 also includes a wire rivet 130 similar to the quick-attach fitting 100, and the wire 210 is wound around the shaft of the wire rivet 130 to form a loop. Therefore, in the buckle 400 as well, the first plane including the wide surface of the webbing 300 and the second plane including the loop surface of the wire 210 maintain a relationship in which they are approximately perpendicular to each other. Therefore, when the buckle 400 is pushed down, the loop surface becomes approximately perpendicular to the seat surface 910, and the wire 210 is pulled out in the horizontal direction, and is therefore not locally bent. Therefore, even if the buckle 400 is repeatedly tilted, the wire 210 will not break. This also applies when the locking tongue 320 is detached from the buckle 400 and only the buckle 400 is tilted.

In fact, the buckle 400 is often pushed down by the occupant with the locking tongue 320 in a disengaged state. In other words, the locking tongue 320 is attached to the buckle 400 after the occupant is seated on the seat surface 910. Therefore, the buckle 400 preferably remains upright even when the locking tongue 320 is detached, such that the locking tongue 320 can be easily fastened. Therefore, with the buckle 400, a sliding prevention member that prevents the loop from sliding around the shaft is adopted in place of the guide ring 141.

FIG. 12 is a perspective view of a crimping ring 143, which is an example of a sliding prevention member. The crimping ring 143 has a guide groove 143a for retaining the wire 210 therein, similar to the guide ring 141, but has many slide prevention protrusions 143b arranged on the surface of the guide groove 143a. Therefore, when the two crimping rings 143 are placed opposite each other and the wire rivet 130 is crimped to the channel 120 such that the wire 210 is sandwiched therebetween, the slide prevention protrusions 143b bite into the wire 210, preventing the wire 210 from sliding.

The above describes examples of the quick-attach fitting 100 and buckle 400 that have a securing part for securing the webbing 300 and a shaft part for winding the wire such that the first plane including the wide surface of the webbing 300 and the second plane including the loop surface of the wire 210 are approximately perpendicular to each other. However, insofar as the wire 210 curves gently with a curvature not smaller than the curvature along the shaft part of the wire rivet 130 when the quick-attach fitting 100 or the buckle 400 is pushed down, the first plane and the second plane may intersect with each other. This manner of relationship depends on the thickness of the wire 210 and the diameter of the shaft part of the wire rivet 130, but it is sufficient if the first plane and the second plane intersect at an angle in the range of approximately 60 degrees to 120 degrees.

Note that if the buckle 400 is not required to remain upright even when the locking tongue 320 is detached, the buckle 400 may adopt the winding configuration of the wire 210 in the quick-attach fitting 100b or the winding configuration of the wire 210 in the quick-attach fitting 100c.

### DESCRIPTION OF CODES

100, 100a, 100b, 100c. Quick-attach fitting, 110. Cover, 111. First cover, 112. Second cover, 120. Channel, 121, 122. Insertion hole, 123. Slit, 130, 130'. Wire rivet, 141. Guide ring, 141a. Guide groove, 142. Rotating ring, 143. Crimping ring, 143a. Guide groove, 143b. Slide prevention protrusion, 144. Crimping ring, 144a. Guide groove, 143b. Slide prevention protrusion, 150. Latch pin, 151. Latch piece, 152. Biasing spring, 200. Pretensioner, 210. Wire, 211. Wire band, 220. Cylinder, 230. Gas generator, 240. Piston, 250. Securing bolt, 300. Webbing, 310. Lap anchor, 320. Locking tongue, 321. Tongue plate, 311. Latching groove, 400. Buckle, 900. Seat, 910. Seat surface, 920. Side surface.

## Claims

1. A connecting member for connecting a wire connected to a drive unit of a pretensioner and a webbing for restraining an occupant in a seat, comprising:
a securing part that secures the webbing such that the webbing extends in a first direction from the connecting member; and
a shaft part around which the wire is wound so as to extend from the connection member in a direction opposite to the first direction; wherein
the securing part and the shaft part are provided such that a first plane including a wide surface of the webbing extending in the first direction and a second plane including a loop surface of a loop formed by the wire around the shaft of the shaft part intersect with each other.

2. The connecting member according to claim 1, wherein the securing part and the shaft part are provided such that the first plane and the second plane are perpendicular to each other.

3. The connecting member according to claim 1 or 2, comprising a retaining member that retains the wire and is rotatable together with the shaft part.

4. The connecting member according to claim 3, wherein the retaining member is provided with a guide groove such that the loop can slide along a set trajectory around the shaft of the shaft part.

5. The connecting member according to claim 3, wherein the retaining member is provided with a guide groove such that a part of the loop can be curved to follow the outer periphery of the shaft part.

6. The connecting member according to claim 1 or 2, comprising a rotating member that retains the wire and is rotatable around the shaft part.

7. The connecting member according to claim 1 or 2, wherein at least a part of the loop is in contact with the outer periphery of the shaft part and is rotatable about the shaft.

8. The connecting member according to claim 1 or 2, wherein the securing part includes a detachment mechanism for attaching and detaching the webbing.
